Europäisches Patentamt

European Patent Office

Office européen des brevets

(19)

(11) Veröffentlichungsnummer: **0 363 368 B1**

# (12) EUROPÄISCHE PATENTSCHRIFT

(45) Veröffentlichungstag der Patentschrift:
02.05.91 Patentblatt 91/18

(21) Anmeldenummer: 88902764.5

(22) Anmeldetag: 31.03.88

(86) Internationale Anmeldenummer:
PCT/AT88/00018

(87) Internationale Veröffentlichungsnummer:
WO 88/07490 06.10.88 Gazette 88/22

(51) Int. Cl.⁵: **B65G 35/06, B23Q 7/14**

---

(54) FÖRDEREINRICHTUNG FÜR MONTAGETEILE.

(30) Priorität: 01.04.87 AT 787/87

(43) Veröffentlichungstag der Anmeldung:
18.04.90 Patentblatt 90/16

(45) Bekanntmachung des Hinweises auf die
Patenterteilung:
02.05.91 Patentblatt 91/18

(84) Benannte Vertragsstaaten:
AT BE CH DE FR GB IT LI LU NL SE

(56) Entgegenhaltungen:
DE-A- 3 316 050

(56) Entgegenhaltungen:
DE-A- 3 338 423
DE-A- 3 409 843
FR-A- 2 185 567
FR-A- 2 510 536

(73) Patentinhaber: Sticht, Walter
Karl-Heinrich-Waggerl-Strasse 8
A-4800 Attnang-Puchheim (AT)

(72) Erfinder: Sticht, Walter
Karl-Heinrich-Waggerl-Strasse 8
A-4800 Attnang-Puchheim (AT)

(74) Vertreter: Wolke, Heidemarie, Dr.
Stadtplatz 7
A-4400 Steyr (AT)

## Beschreibung

Die Erfindung betrifft eine Fördereinrichtung für Werkstückträger mit einer Tragvorrichtung, die in ihren in Förderrichtung der Werkstückträger voneinander distanzierten Endbereichen über je ein um senkrecht zur Höhenführungsbahn verlaufende Achsen relativ zur Tragvorrichtung verschwenkbar gelagertes Fahrwerk auf Führungsbahnen der Seite und der Höhe nach geführt ist, und mit einer Vorschubvorrichtung für die Werkstückträger.

Eine bekannte Transportanlage für Werkstückträger – gemäß DE-A1 31 30 024 – ist mit Seiten- und Höhenführungsbahnen versehen, entlang welcher die Werkstückträger geführt sind. Die Werkstückträger bestehen aus einer Tragvorrichtung, die in ihren in Förderrichtung der Werkstückträger voneinander distanzierten Endbereichen über je ein Fahrwerk entlang der Seiten-und Höhenführungsbahnen geführt ist. Jedes der Fahrwerke ist um eine senkrecht zur Höhenführungsbahn verlaufende Achse relativ zur Tragvorrichtung verschwenkbar. Zur Fortbewegung der Werkstückträger entlang der einen Hauptförderweg bildenden Seiten- und bzw. oder Höhenführungsbahnen sind Reibrollenantriebe vorgesehen, die an der Tragvorrichtung der Werkstückträger angreifen. Zum Umsetzen in senkrecht dazu verlaufende Förderwege bzw. zum Transport der Werkstückträger in diesen Förderwegen sind eigene Schleppförderer vorgesehen, die an einem der Fahrwerke angreifen. Durch die den unterschiedlichen Teilen der Werkstückträger zugeordneten Vorschubvorrichtungen ist der Aufwand für derartige Transportanlagen relativ hoch und es entstehen immer wieder Schwierigkeiten beim Einlaufen und Umsetzen der Werkstückträger von einer Vorschubvorrichtung in die andere.

Weiters sind auch bereits verschiedene Fördereinrichtungen für Montageanlagen bekanntgeworden – gemäß DE-C 27 56 422, DE-A1 33 04 090, DE-A1 33 04 091, DE-A1 34 09 843 und DE-A1 34 11 452 des gleichen Anmelders bzw. Erfinders –, bei welchen die Werkstückträger der Fördereinrichtung auf Führungsbahnen der Höhe und Seite nach geführt sind. Die Werkstückträger bestehen aus einer Tragvorrichtung und einem Fahrwerk, und es ist ihnen eine Vorschubvorrichtung zugeordnet. Derartige Fördereinrichtungen mit dazugehörigen Werkstückträgern haben sich in der Praxis bewährt. Der Platzbedarf für die Führungsbahnen bei großen Werkstückträgern ist jedoch groß, und derartige Fördereinrichtungen sind daher aufwendig und teuer.

Der vorliegenden Erfindung liegt die Aufgabe zugrunde, eine Fördereinrichtung der eingangs genannten Art zu schaffen, auf der Werkstückträger mit unterschiedlichen Abmessungen verwendet werden können.

Diese Aufgabe der Erfindung wird dadurch gelöst, daß die Fördereinrichtung für eine Montageanlage eine entlang von Führungsbahnabschnitten auf Maschinentischen und Drehvorrichtungen angeordnete Vorschubvorrichtung umfaßt, die den Fahrwerken der Werkstückträger zugeordnet ist. Durch diese Lösung wird in überraschend einfacher und vorteilhafter Weise erreicht, daß auf Fördereinrichtungen die für Werkstückträger mit kleineren Abmessungen konzipiert sind, auch große Tragvorrichtungen für Montageaufnahmen bzw. Halterungen für zu montierende Einzelteile oder auch zur Aufnahme von halbfertigen und bereits fertigen Produkten eingesetzt werden können.

Außerdem kann im Übergangsbereich zwischen winkelig verlaufenden Führungsbahnabschnitten mit standardmäßigen Bauteilen wie Drehtellern oder dgl. gearbeitet werden, wie diese bereits jetzt für Werkstückträger kleinerer Abmessungen eingesetzt werden. Gleichzeitig wird hiermit auch für Tragvorrichtungen von Werkstückträgern mit größeren Abmessungen eine präzise Führung und Halterung bzw. spielfreie Abstützung gegenüber den Führungsbahnen beibehalten.

Weiters ist es auch möglich, daß die Tragvorrichtung relativ zu den Fahrwerken quer zur Förderrichtung verstellbar gelagert ist, wodurch in Förderrichtung nebeneinander mehrere zu bearbeitende Werkstücke oder Einzelteile angeordnet werden können und diese jeweils in die gleiche Bearbeitungsposition verbracht werden können. Darüberhinaus ist es dadurch auch möglich, im Bereich winkelig aneinander stoßender Führungsbahnabschnitte feststehenden Einbauten auszuweichen.

Vorteilhaft ist es weiters, wenn ein Ende der Achse auf einer quer zur Förderrichtung der Werkstückträger verlaufenden Führungsvorrichtung abgestützt ist und daß vorzugsweise die Führungsvorrichtung auf dem Fahrwerk gelagert ist, da dadurch auch bei einer seitlichen Verschiebung der Tragvorrichtung diese stabil und maßgenau gehaltert werden kann.

Nach einer anderen Ausführungsvariante ist vorgesehen, daß die Tragvorrichtung auf einer parallel zur Förderrichtung verlaufenden Schwenkachse gelagert und um diese gegenüber den Fahrwerken verschwenkbar ist, da dadurch in einfacher Weise zu bearbeitende bzw. zu montierende Werkstücke in unterschiedliche Lagen relativ zu der Höhen- und Seitenführungsbahn verbracht werden können.

Nach einer anderen Weiterbildung der Fördereinrichtung ist vorgesehen, daß die den Fahrwerken der Fördereinrichtung zugeordnete Vorschubvorrichtung durch an deren Seitenflächen zur Anlage kommende, den Führungsbahnen benachbart angeordnete Förderrollen gebildet ist. Diese Ausbildung der Fördereinrichtung ermöglicht, daß jedes der beiden Fahrwerke unabhängig voneinander angetrieben und spielfrei an einer der beiden Seitenführungsbahnen geführt werden kann. Darüberhinaus ist es bei einer derartigen Ausbildung auch möglich, nur die dem Drehteller benachbarten geradlinigen Führungsbahnabschnitte mit Vorschubantrieben auszurüsten und einenn Vorschubantrieb am Drehteller einzusparen, da durch die Vorschubantriebe in den anschließenden Führungsbahnabschnitten jeweils ein Fahrwerk des Werkstückträgers in den Drehteller hinein und aus diesem herausgeschoben bzw. gezogen werden kann.

Es ist aber weiters auch möglich, daß zwischen senkrecht zueinander verlaufenden Führungsbahnabschnitten der Führungsbahn eine Drehvorrichtung mit einem darauf angeordneten Führungsbahnabschnitt angeordnet ist, dessen Länge größer ist als die Distanz der Seiten- bzw. Höhenführungsrollen der Fahrwerke in Förderrichtung, wobei auf der Drehvorrichtung ebenfalls Förderrollen wie in den übrigen Führungsbahnabschnitten angeordnet sind, so daß jedes Fahrwerk unabhängig vom weiteren Fahrwerk um die Schwenkachse in die gewünschte neue Fahrtrichtung verschwenkt werden kann.

Vorteilhaft ist es aber auch, wenn die Tragvorrichtung mit einem Montageplatz für ein Werkstück und bzw. oder mit Aufnahmeplätzen für Einzelteile zur Herstellung eines Werkstückes versehen ist, da dadurch in einfacher Weise auf unterschiedliche Kapazitäten einer Montagemaschine abgestellt werden kann, da die zur Montage benötigten Einzelteile vorerst von Hand und später vollautomatisch auf die Tragvorrichtung, auf welcher sie montiert werden, abgelegt werden können.

Von Vorteil ist es weiters, wenn die Tragvorrichtung über bedarfsweise lösbare Kupplungsvorrichtungen mit den Fahrwerken verbunden ist, da dadurch die Tragvorrichtungen zum Bestücken mit Einzelteilen bzw. zum Auflegen von Halbfertigteilen oder Entnehmen von Fertigteilen von den Fahrwerken abgenommen und gegebenenfalls in einfacher Weise zwischengespeichert werden können.

Mit Vorteil ist es auch möglich, daß den Fahrwerken und bzw. oder der Tragvorrichtung Kodierelemente und bzw. oder Übertragungseinheiten einer Kodiervorrichtung zugeordnet sind. Tragen bei dieser bevorzugten Ausführungsform die Fahrwerke die Vorrichtungen zum Kodieren und Positionieren der Tragvorrichtung, so kann der Aufwand für die Herstellung derartiger Werkstückträger bei einer Vielzahl von in Einsatz befindlichen Tragvorrichtungen in günstigen Grenzen gehalten werden.

Nach einer anderen Ausführungsform der Fördereinrichtung ist vorgesehen, daß zwei in Förderrichtung fluchtende, hintereinander liegende Führungsbahnabschnitte der Führungsbahn über eine Drehvorrichtung miteinander verbunden sind und ein senkrecht zu diesen verlaufender weiterer Führungsbahnabschnitt mit dem Mittelpunkt der Drehvorrichtung fluchtend angeordnet ist, wobei einem der beiden fluchtend hintereinander angeordneten Führungsbahnabschnitte und dem senkrecht dazu verlaufenden Führungsbahnabschnitt eine erste Vorschubvorrichtung mit gleichsinniger Förderrichtung und dem zweiten Führungsbahnabschnitt eine Vorschubvorrichtung mit einer zur ersten Vorschubvorrichtung entgegengesetzten Förderrichtung zugeordnet ist, wodurch die Tragvorrichtungen bzw. Werkstückträger in einfacher Weise innerhalb einer Montageanlage gewendet werden können.

Weiters ist es aber auch möglich, daß zwei Führungswege in Förderrichtung hintereinander senkrecht zu einem über Drehvorrichtungen mit ihnen verbundenen Führungsbahnabschnitt der Führungsbahn mit diesem verbunden sind und daß ein parallel zum Führungsbahnabschnitt verlaufender Führungswegabschnitt über weitere Drehvorrichtungen mit den quer verlaufenden Förderwegen verbunden und in einem der Distanz zwischen den Fahrwerken entsprechenden Abstand angeordnet sind, wodurch in einfacher Weise die Werkstückträger in einer zur Förderrichtung quer verlaufenden Lage gespeichert bzw. magaziniert werden können und dabei jene Werkstückträger, die als erste in die Speicherstation einlaufen, auch als erster diese wieder verlassen können

Nach einer anderen Ausführungsform der Erfindung ist vorgesehen, daß die voneinander abgewendeten Enden der Tragvorrichtung innerhalb eines Umhüllungskreises angeordnet sind, dessen Mittelpunkt in der Mitte zwischen den vertikalen Achsen zwischen den Fahrwerken und der Tragvorrichtung liegt, wodurch im Wendebereich zwischen winkelig zueinander verlaufenden Führungsbahnabschnitten weniger Platz nötig ist.

Es ist aber auch möglich, daß die Tragvorrichtung mehrteilig ausgebildet ist und die Teile über eine Gelenkanordnung, insbesondere eine gelenkige, bedarfsweise lösbare Kupplungsvorrichtung, untereinander verbunden sind, wodurch der Übergang von einem geradlinigen Führungsbahnabschnitt auf einen winkelig dazu verlaufenden Führungsbahnabschnitt mit geringem Platzbedarf möglich ist. Erfolgt die Verbindung zwischen diesen Teilen der Tragvorrichtung überdies über Kupplungsvorrichtungen, so ist es zusätzlich möglich, jeweils jedes Fahrwerk mit dem diesem zugeordneten Teil der Tragvorrichtung voneinander unabhängigen Führungsbahnabschnitten, beispielsweise zum Beschicken oder Beladen mit Einzelteilen oder zur Durchführung von Technologie-Operationen oder dgl., zuzuführen.

Nach einer anderen Ausführungsvariante ist vorgesehen, daß auf der Tragvorrichtung Aufnahmeplätze und bzw. oder Kupplungsvorrichtungen für Zwischenträger von Bauteilen und bzw. oder Einzelteilen angeordnet sind. Dadurch ist es möglich, unterschiedliche Bauteile bzw. Einzelteile in Zwischenträger mit gleichen Abmessungen zu lagern, wodurch eine flexible Ausnutzung der Tragvorrichtungen erzielt wird.

Weiters ist es auch möglich, daß zwischen verschiedenen Förderbahnabschnitten quer zur Förderrichtung verschiebbare Förderbahnteile vorgesehen sind, die mit einer Querverstellvorrichtung verbunden sind und mit dieser aus einer mit einem ersten Abschnitt fluchtenden Stellung in eine mit einem zweiten Abschnitt einer parallel laufenden Förderbahn fluchtende Stellung verstellbar sind, wodurch unter Ausnützung der Achsen zwischen der Tragvorrichtung und den Fahrwerken durch eine einfache Querverstellvorrichtung das Verfahren des Werkstückträgers von einem Führungsbahnabschnitt in einen winkelig dazu verlaufenden möglich ist.

Von Vorteil ist es weiters auch, wenn die querverstellbaren Förderbahnteile in Förderrichtung der Förderbahn eine Länge aufweisen, die größer ist als der Abstand zwischen den in Förderrichtung am weitesten voneinander distanzierten Seitenbzw. Höhenführungsrollen von zwei einer Tragvorrichtung zugeordneten Fahrwerken, wodurch die Tragvorrichtung mit beiden Fahrwerken gleichzeitig quer verschoben werden kann.

Nach einer anderen Ausführungsform ist vorgesehen, daß dem querverschiebbaren Förderbahnteil eine Halte- bzw. Fixiervorrichtung für die Fahrwerke zum Positionieren derselben innerhalb des Förderbahnteiles zugeordnet ist, so daß ein versehentliches Abrollen der Fahrwerke während des Verstellvorganges verhindert wird.

Es ist aber auch möglich, daß auf der Tragvorrichtung im Bereich ihrer parallel zur Förderrichtung verlaufenden Längskanten quer zur Förderrichtung ausgerichtete Stoßdämpfer angeordnet sind, wodurch bei einem Speichern oder Magazinieren der Werkstückträger mit ihren Tragkörpern parallel zueinander Schläge und Stöße beim Auftreffen der hintereinander angeordneten Tragkörper vermieden werden.

Zum besseren Verständnis der Erfindung wird diese im folgenden anhand der in den Zeichnungen dargestellten Ausführungsbeispiele näher erläutert.

Es zeigen :

Fig. 1 eine Fördereinrichtung für eine Montageanlage mit winkelig zueinander verlaufenden Führungsbahnabschnitten in Draufsicht ;
Fig. 2 die Förderanlage nach Fig.1 in Stirnansicht, im Schnitt, gemäß den Linien II-II in Fig.1 ;
Fig. 3 einen Werkstückträger der Fördereinrichtung mit einer auf zwei voneinander distanzierten Fahrwerken abgestützten Tragvorrichtung in schaubildlicher Darstellung ;
Fig. 4 eine Ausführungsvariante einer Fördereinrichtung für Montageanlagen mit parallel und winkelig zueinander verlaufenden Führungsbahnbzw. Förderwegabschnitten in Draufsicht und vereinfachter schematischer Darstellung ;
Fig. 5 eine Ausführungsvariante eines Werkstückträgers der Fördereinrichtung in Stirnansicht und vereinfachter schematischer Darstellung ;
Fig. 6 eine Fördereinrichtung mit zwei senkrecht zueinander verlaufenden Förderbahnabschnitten in Stirnansicht, geschnitten, mit einer der Fördereinrichtung zugeordneten Steuereinrichtung, ebenfalls in vereinfachter schematischer Darstellung.

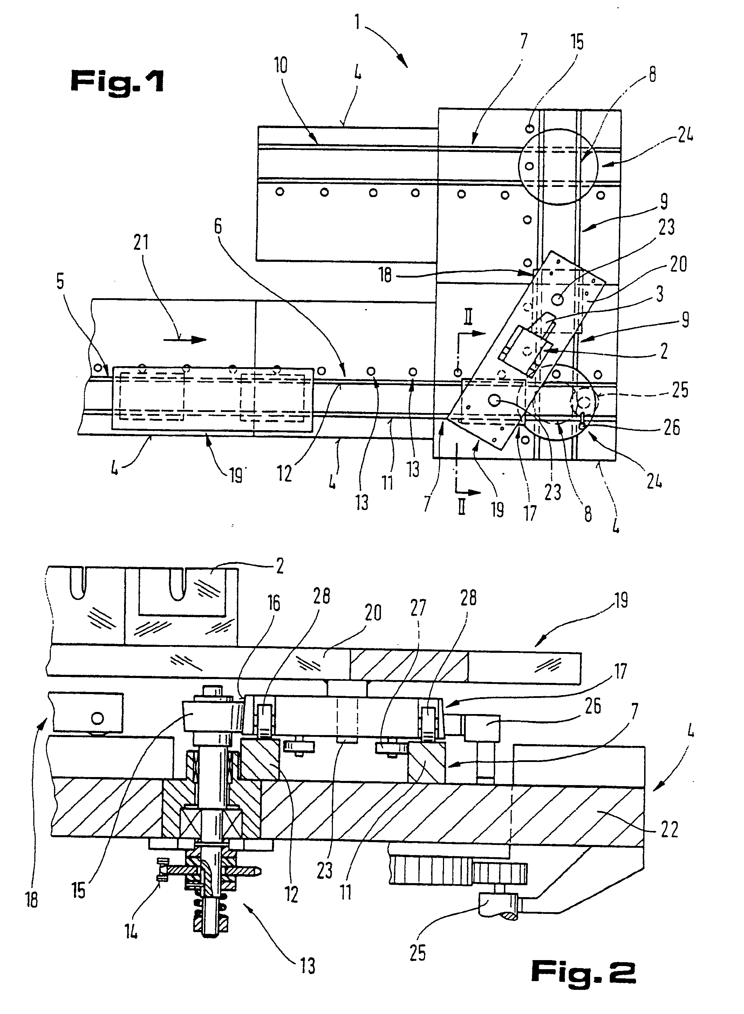

In Fig. 1 und 2 ist eine Fördereinrichtung einer Montageanlage 1 zum halb- bzw. vollautomatischen Montieren von Werkstücken 2 aus Einzelteilen 3 gezeigt. Diese Fördereinrichtung umfaßt eine Führungsbahn, die aus auf Maschinentischen 4 angeordneten Führungsbahnabschnitten 5, 6, 7, 8, 9, 10 zusammengesetzt ist. Jeder Führungsbahnabschnitt besteht aus Führungsleisten 11, 12 die eine Seitenführungsbahn und eine Höhenführungsbahn bilden. Entlang dieser ist eine Vorschubvorrichtung 13 angeordnet. Diese umfaßt über eine Kette 14 angetriebene Förderrollen 15. Die Förderrollen 15 sind Seitenflächen 16 von Fahrwerken 17, 18 eines Werkstückträgers 19 zugeordnet. Dieser umfaßt auch eine die beiden Fahrwerke 17 und 18 brückenartig verbindende Tragvorrichtung 20. Die Tragvorrichtung 20 ist in ihren beiden in Förderrichtung – Pfeil 21 – voneinander distanzierten Endbereichen über senkrecht zu Tischplatten 22 der Maschinentische 4 verlaufende Achsen 23 gelenkig mit den Fahrwerken 17 und 18 verbunden.

Die Führungsbahn besteht aus den geradlinigen Führungsbahnabschnitten 5-10, wobei die Führungsbahnabschnitte 9 senkrecht zu den Führungsbahnabschnitten 5, 6, 7, 10 verlaufen. Die Verbindung der senkrecht zueinander verlaufenden Führungsbahnabschnitte erfolgt über die Führungsbahnabschnitte 8 die auf Drehvorrichtungen 24 angeordnet sind. Mittels eines Antriebsmotors 25 ist die Drehvorrichtung 24 und mit ihr der Führungsbahnabschnitt 8 aus der in vollen Linien gezeichneten Stellung in die in strichlierten Linien gezeichnete Stellung verschwenkbar.

Mögliche Ausführungsformen derartiger Drehvorrichtungen 24 sind in der DE-OS 33 04 090 sowie der DE-OS 35 02 868 des gleichen Anmelders beschrieben, worauf zur Vermeidung von Wiederholungen ausdrücklich Bezug genommen wird.

Wie weiters aus der Fig.1 besser ersichtlich ist, sind die Förderrollen 15 der Vorschubvorrichtung 13 entlang der geradlinigen Führungsbahnabschnitte 5-7, 9, 10 und im Bereich der Drehvorrichtung 24 entlang des Führungsbahnabschnittes 8 angeordnet.

Das Umsetzen des Werkstückträgers 19 aus dem Führungsbahnabschnitt 7 in den senkrecht dazu verlaufenden Führungsbahnabschnitt 9 erfolgt derart, daß nach Einlaufen des ersten Fahrwerkes 18 in die Drehvorrichtung 24 der Werkstückträger 19 angehalten und das Fahrwerk 18 mit der Drehvorrichtung 24 um die Achse 23 um 90° gegenüber der Tragvorrichtung 20 verschwenkt wird. Daraufhin werden die Förderrollen 15 im Bereich der Führungsbahnabschnitte 7, 9 und des Führungsbahnabschnittes 8 aktiviert bzw. eine Blockierung des Fahrwerkes 17 bzw. 18 mittels einer Positioniervorrichtung 26 aufgehoben. Dadurch wird das Fahrwerk 17 in Richtung der Drehvorrichtung 24 vorwärts geschoben und gleichzeitig das Fahrwerk 18 aus der Drehvorrichtung 24 in den Führungsbahnabschnitt 9 hineingeschoben. Hat das Fahrwerk 18 die Drehvorrichtung 24 verlassen wird diese um 90° zurückgeschwenkt, sodaß dessen Führungsbahnabschnitt 8 mit dem Führungsbahnabschnitt 7 fluchtet. Daraufhin kann das Fahrwerk 17 in die Drehvorrichtung 24 einlaufen. Dort wird es mit der Positioniervorrichtung 26 im Bereich des Führungsbahnabschnittes 8 angehalten und mit der Drehvorrichtung 24 ebenfalls um 90° verschwenkt. Anschließend bewegt sich der Werkstückträger 19 geradlinig entlang der Führungsbahnabschnitte 9 in den Bereich der zwischen diesen und dem anschließenden Führungsbahnabschnitt 7, 10 angeordneten weiteren Drehvorrichtung 24. Mit der weiteren Drehvorrichtung 24 wird in der vorher beschriebenen Weise der Werkstückträger 19 auf den Führungsbahnabschnitt 7, 10 umgesetzt. Die exakte Funktion der Positioniervorrichtung 26 mit kontinuierlich laufenden Förderrollen 15 der Vorschubvorrichtung 13 ist beispielsweise in der DE-OS 34 47 219 des gleichen Anmelders exakt beschrieben, worauf zur Vermeidung von Wiederholungen Bezug genommen wird.

Wie die Darstellungen in Fig. 1 und 2 deutlich zeigen, ist es aufgrund dieser erfindungsgemäßen Lösung nunmehr möglich, mit relativ kleinen Fahrwerken 17, 18 deren Größe für die Montage kleiner Werkstücke 2 ausreicht, auch Tragvorrichtungen 20 für größere Werkstücke oder für die Mehrfachanordnung von Werkstücken vorzusehen, ohne daß die Fördereinrichtung der Montageanlage 1 gegenüber jenen Werkstückträgern, bei welchen die Tragvorrichtung nur ein Fahrwerk 17 oder 18 aufweist, verändert werden muß.

Aus der Darstellung in Fig. 2 ist weiters zu ersehen, daß durch eine mit den Förderrollen 15 in Richtung der dieser gegenüberliegenden Seitenführungsbahn gerichteten Anpreßkraft Seitenführungsrollen 27 des Fahrwerkes 17 spielfrei an die Seitenführungsbahn angepreßt werden. Zur Höhenführung der Fahrwerke 17, 18 dienen Höhenführungsrollen 28. Selbstverständlich können anstelle der Seiten- und Höhenführungsrollen 27, 28 entsprechende Gleitleisten, die gegebenenfalls mit verschleißfesten Belägen versehen sein können, angeordnet werden.

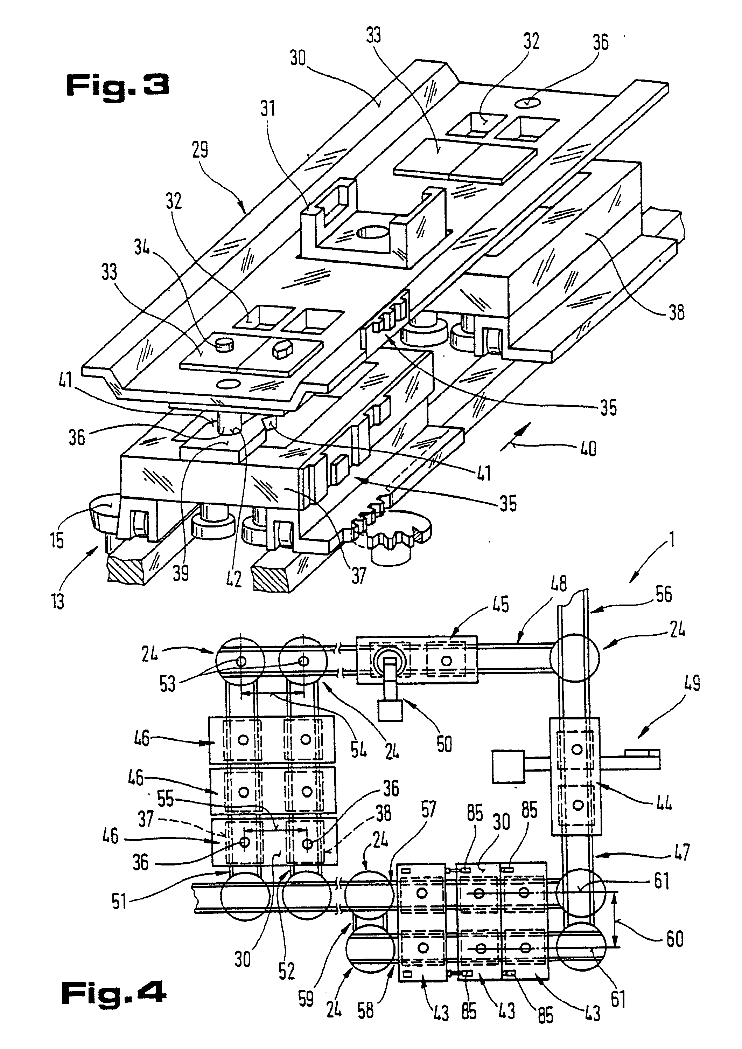

In Fig. 3 ist ein Werkstückträger 29 gezeigt, der eine plattenförmige Tragvorrichtung 30 aufweist. Auf dieser Tragvorrichtung 30 ist ein Montageplatz 31 mit einer Aufnahme für ein zu montierendes Werkstück 2 vorgesehen. Diesem Montageplatz 31 sind Aufnahmeplätze 32 zur Halterung von Einsätzen 33 benachbart, welche Einzelteile 34 zur Herstellung des Werkstückes 2 lagern. Es ist aber auch möglich, daß die Einzelteile 34 direkt ohne Einsätze 33 in die Aufnahmeplätze 32 abgelegt werden können.

Auf einer Seitenkante der brückenartig ausgebildeten Tragvorrichtung 30 sind Kodierelemente 35 angeordnet. Mit diesen Kodierelementen 35 ist es beispielsweise möglich, den Arbeitsablauf zu überwachen bzw. die Tragvorrichtung 30 jederzeit zu identifizieren oder deren Beladungszustand mit Einzelteilen 34 sowie gegebenenfalls auch den Bearbeitungszustand des Werkstückes 2 am Montageplatz 31 abzufragen bzw. festzuhalten.

Die Tragvorrichtung 30 ist über zwei vertikale Achsen 36 auf fahrwerken 37 und 38 abgestützt. Die Ausbildung der fahrwerke 37, 38 sowie der dieser zugeordneten förderrollen 15 der Vorschubvorrichtung 13 entspricht der in fig. 1 und 2 beschriebenen Ausführungsform, weshalb bei diesem Ausführungsbeispiel auf deren Ausführung nicht näher eingegangen wird. Die Verbindung der Achsen 36 mit den fahrwerken 37, 38 erfolgt über eine Kupplungsvorrichtung 39. Die Kupplungsvorrichtung 39 ist beispielsweise durch eine elastische Klammer gebildet. Diese weist zwei in fortbewegungsrichtung – Pfeil 40 – des Werkstückträgers 29 vorstehende federarme 41 auf. Dadurch ist es möglich, die fahrwerke 37, 38 in fortbewegungsrichtung – Pfeil 40 – auf die in der richtigen Höhe gehaltene Tragvorrichtung 30 zuzubewegen. Bei der Vorwärtsbewegung werden die Achsen 36 der Tragvorrichtung 30 in die Kupplungsvorrichtung 39 eingeschoben, wobei federarme 41 auseinandergedrückt werden, nach dem Einrasten der Achse 36 in eine Bohrung 42 schnappen die federarme 41 zusammen und die Tragvorrichtung 30 wird über die Achsen 36 in ihrer Lage positioniert.

Selbstverständlich ist es auch möglich, jegliche andere Kupplungsvorrichtung zwischen den Achsen 36 und den fahrwerken 37 und 38 zu verwenden. Beispielsweise bestehend aus gegengleichen Kupplungsteilen in Schwalbenschwanzform oder magnetische, hydraulische oder federkraftbetätigte Kupplungen, die eine rasche Verbindung der fahrwerke 37 und 38 mit den Achsen 36 ermöglichen.

Desgleichen können Kodierelemente 35 auch auf den fahrwerken 37, 38 vorgesehen werden, wie dies beispielsweise beim fahrwerk 37 gezeigt ist. Die Ausbildung derartiger Kodiervorrichtungen kann beispielsweise gemäß der DE-OS 34 09 844 des gleichen Anmelders erfolgen. Selbstverständlich ist es möglich, auf diese Kodierelemente bestimmte Informationen an den einzelnen Bearbeitungsstationen einzulesen, um diese an den nachfolgenden Bearbeitungsstationen abfragen zu können.

In Fig. 4 ist schematisch eine Montageanlage 1 gezeigt, bei der Werkstückträger 43–46 in einem Kreislauf bewegt werden. Entlang von führungsbahnabschnitten 47 und 48 sind Handhabungsvorrichtungen 49 und Bearbeitungswerkzeuge 50 angeordnet, mit welchen Werkstücke 2 montiert werden können. Das Umsetzen der Werkstückträger 44 und 45 vom führungsbahnabschnitt 47 auf den führungsbahnabschnitt 48 erfolgt beispielsweise wie anhand der fig.1 und 2 erläutert mittels einer Drehvorrichtung 24.

Zur Zwischenspeicherung von Werkstückträgern kann, wie anhand der Werkstückträger 46 gezeigt, parallel zu einem führungsbahnabschnitt 51 ein förderwegabschnitt 52 angeordnet sein. Jeder der beiden Abschnitte ist über eine eigene Drehvorrichtung 24 mit dem führungsbahnabschnitt 48 verbunden. Von diesen nebeneinander angeordneten Drehvorrichtungen 24 sind Mittelpunkte 53 um eine Distanz 54 im Abstand voneinander angeordnet, die in etwa einer Distanz 55 zwischen den Achsen 36 entspricht, die zwischen den Fahrwerken 37, 38 und einer Tragvorrichtung 30 angeordnet sind.

Dadurch wird auch eine platzsparende Zwischenmagazinierung oder Zwischenlagerung von Tragvorrichtungen 30 bzw. Werkstückträgern im Zuge einer Montageanlage 1 erreicht.

Ist es beispielsweise im Zuge einer Montageanlage 1 erforderlich zwischen der Handhabungsvorrichtung 49 und dem Bearbeitungswerkzeug 50 den Werkstückträger 44 um 180° zu wenden, so ist es möglich, im Anschluß an die Drehvorrichtung 24 und in Verlängerung des Führungsbahnabschnittes 47 einen Führungsbahnabschnitt 56 anzuordnen. Dadurch ist es möglich, daß beispielsweise der Werkstückträger 44 mit seinem vorderen Fahrwerk die Drehvorrichtung 24 passiert, bis sich das in Förderrichtung hintere Fahrwerk im Bereich der Drehvorrichtung 24 befindet, worauf dieses Fahrwerk um 90° verschwenkt und in Richtung des Führungsbahnabschnittes 48 weiterbewegt wird, bis sich das vom Führungsbahnabschnitt 56 in Richtung der Drehvorrichtung 24 zurückbewegende Fahrwerk auf der Drehvorrichtung 24 befindet, worauf auch dieses Fahrwerk um 90° verschwenkt wird und dann in den Führungsbahnabschnitt 48 einläuft. Dadurch ist es in einfacher Weise möglich, auch derartige großflächige Tragvorrichtungen für unterschiedlich aufeinanderfolgende Bearbeitungsvorgänge zu wenden.

Es ist aber auch möglich – wie im Bereich der Werkstückträger 43 gezeigt – einen Führungsbahnabschnitt 57 mit einem Förderwegabschnitt 58 über einen senkrecht zu diesen verlaufenden Führungsweg 59 zu verbinden. Die Drehvorrichtungen 24 werden, wie bereits anhand der Anordnung der Drehvorrichtungen 24 im Bereich des Führungsbahnabschnittes 48 erläutert, in einem, der Distanz 55 zwischen den Achsen 36 entsprechenden Abstand voneinander angeordnet. Gleiches gilt auch für einen Abstand 60 zwischen Mittellängsachsen 61 des Führungsbahn- bzw. Förderwegabschnittes.

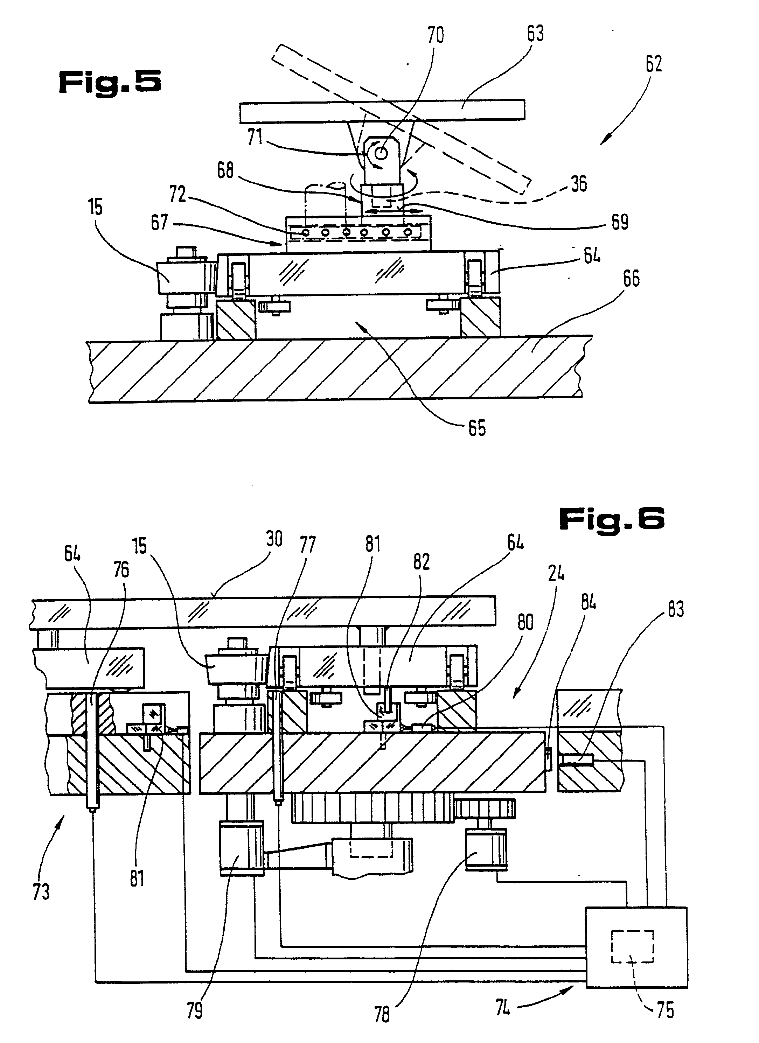

In Fig. 5 ist eine Ausführungsvariante eines Werkstückträgers 62 gezeigt, bei welchem eine Tragvorrichtung 63 gegenüber Fahrwerken 64 beliebig einstellbar ist. Die Fahrwerke 64 sind auf einer Führungsbahn 65 die auf einem Maschinentisch 66 angeordnet ist, verstellbar gelagert. So ist in einer quer zur dargestellten Förderrichtung verlaufenden Führungsvorrichtung 67 eine Halterung 68 wie mit einem Pfeil 69 angedeutet, in unterschiedliche Stellungen, beispielsweise aus der in strichlierten Linien gezeichneten Stellung in die in strich-punktierten Linien gezeichnete Stellung verstellbar. Damit kann die Tragvorrichtung 63 in unterschiedliche Abstände und Positionen zur Führungsbahn 65 verbracht werden. Ist es weiters erforderlich, die auf der Tragvorrichtung 63 angeordneten Bauteile bzw. Werkstücke in unterschiedliche Bearbeitungspositionen beispielsweise beim Nieten, Schweißen und dergleichen zu verbringen, so kann die Tragvorrichtung 63 auch um eine Schwenkachse 70 der Halterung 68 beispielsweise aus der in vollen Linien in die in strichlierten Linien gezeichnete Stellung entsprechend einem Pfeil 71 verschwenkt werden. Desweiteren ist die Halterung 68 zweiteilig ausgebildet, wobei die beiden Teile der Halterung 68 über die Achse 36 miteinander verbunden sind. Dadurch ist auch eine beliebige Verdrehung um eine vertikal zum Maschinentisch verlaufende Achse zwischen den Fahrwerken 64 und der Tragvorrichtung 63 möglich. Zur Fixierung der Halterung 68 in unterschiedlichen Positionen quer zur Führungsbahnlängsrichtung können in der Führungsvorrichtung 67 Bohrungen 72 angeordnet sein, in welche Haltestifte eingeschoben werden können. Desweiteren ist es aber auch möglich, sowohl zum seitlichen Verschieben, als auch zum Verschwenken bzw. zum Verdrehen jeweils eigene Antriebe vorzusehen, bzw. durch selbsthemmende Klinkenanordnungen oder Arretiervorrichtungen die vor einem Verstellen in den einzelnen Bearbeitungsstationen gelöst werden können, die Halterung 68 bzw. die Tragvorrichtung 63 in unterschiedliche Stellungen zueinander bzw. gegenüber dem Fahrwerk 64 zu positionieren.

In Fig. 6 ist schematisch ein Übergangsbereich zwischen zwei winkelig zueinander verlaufenden Führungsbahnabschnitten 73 gezeigt, welche über eine Drehvorrichtung 24 miteinander verbunden sind. Zur Steuerung des Umsetzens der Fahrwerke 64 – gleiches gilt selbstverständlich auch für die Fahrwerke 37, 38 bzw. 17 oder 18 – ist eine Steuereinrichtung 74 angeordnet. Diese Steuereinrichtung 74 kann einen Steuerrechner 75 umfassen, an welchem Ausgänge von Überwachungsvorrichtungen 76, 77 sowie ein Drehantrieb 78, ein Vorschubantrieb 79 und ein Verstellantrieb 80 angeschlossen sind. Der Drehantrieb 78 dient zum Verdrehen der Drehvorrichtung 24, während der Vorschubantrieb 79 zum Antrieb der Förderrollen 15 und der Verstellantrieb 80 zum Verstellen einer Anschlagplatte 81 für einen auf der Unterseite des Fahrwerks 64 angeordneten Anschlag 82 dient. Eine gleichartige Anschlagplatte 81 ist im Führungsbahnabschnitt 73 vor der Drehvorrichtung 24 angeordnet. Ein Antrieb dieser weiteren Anschlagplatte 81 ist ebenfalls mit der Steuereinrichtung 74 verbunden.

Ein Programm zum Betrieb des Steuerrechners kann nun wie folgt ablaufen :

Programmbeginn

fahrwerk 64 im Bereich der Überwachungsvorrichtung 76 ?
Wenn ja – Stellung Drehvorrichtung 24 abfragen?
Überwachungsvorrichtung 83 durch Kontaktblock 84 nicht aktiviert ?
Wenn ja – freigabe der der Überwachungsvorrichtung 76 nachgeordneten Anschlagplatte 81.
Vorschubantrieb 79 auf Drehvorrichtung 24 aktivieren.
fahrwerk 64 in Drehvorrichtung 24 eingelaufen ?
Überwachungsvorrichtung 77 aktiviert ?

Wenn nein – fehlermeldung

Wenn ja – Drehantrieb 78 zur Verdrehung der Drehvorrichtung 24 aktivieren ?
Wenn ja – Verstellantrieb 80 zum Verschwenken der Anschlagplatte 81 und freigabe des Anschlages 82 aktivieren.
Vorschubantrieb 79 für förderrollen 15 beaufschlagen.
Abwarten bis freimeldung durch Überwachungsvorrichtung 77 erfolgt.
Vorschubantrieb 79 stoppen.
Verstellantrieb 80 zum Rückverstellen der Anschlagplatte 81 in Ausgangsposition beaufschlagen.
Drehantrieb 78 zur Rückverstellung in Ausgangslage beaufschlagen.
Meldung an Steuerrechner 75 – Ausgangsstellung zur Aufnahme eines weiteren Fahrwerkes 64 erreicht.

Programmablaufende.

Anhand des vorstehend beschriebenen Verfahrensablaufes ist es möglich, zwei eine Tragvorrichtung 20, 30, 63 aufnehmende Fahrwerke 17, 18, 37, 38, 64 eines Werkstückträgers 19, 43-46 jeweils gesondert um 90° zu verschwenken und dadurch den Übergang derartiger Werkstückträger 19, 43-46 von einem Führungsbahnabschnitt 5, 6, 7, 10, 47, 51, 73 auf einem beispielsweise unter 90° versetzten Führungsbahnabschnitt 9, 48, 57 zu ermöglichen.

Selbstverständlich ist es im Rahmen der Erfindung möglich, anstelle der Verwendung eines Steuerrechners und der Benutzung der beschriebenen Software jede beliebige analoge oder digitale Steuerung für einen entsprechenden Steuerungsablauf zu konzipieren. Darüber hinaus ist die Lösung der erfindungsgemäßen Aufgabenstellung nicht an den vorstehend beschriebenen Verfahrensablauf zwingend gebunden, sondern es ist möglich, beliebige Abwandlungen in diesem Verfahrensablauf vorzunehmen.

Auch ist die Ausbildung der Führungsbahnabschnitte und der Förderwegabschnitte sowie der diesen zugeordneten Vorschubvorrichtungen nicht an die dargestellte Ausführungsbeispiele gebunden. Die Fahrwerke der Werkstückträger können auch auf Förderbändern, Doppelgurtbändern oder ähnlichen aufliegen.

Wie weiters, beispielsweise in Fig. 4 gezeigt ist, können Tragvorrichtungen 30 von Werkstückträgern 43 mit im Bereich ihrer Längskanten angeordneten Stoßdämpfern 85 versehen sein, die beim Positionieren der Tragvorrichtungen 30 zum Magazinieren Schläge und Stöße, die zu einem Herabfallen von Bauteilen bzw. Einzelteilen führen könnten, vermeiden.

**Ansprüche**

1. fördereinrichtung für Werkstückträger (19, 43-46) mit einer Tragvorrichtung (20, 30, 63) die in ihren in förderrichtung der Werkstückträger (19, 43-46) voneinander distanzierten Endbereichen über je ein um senkrecht zur Höhenführungsbahn verlaufenden Achsen (36) relativ zur Tragvorrichtung (20, 30, 63) verschwenkbar gelagertes fahrwerk (17, 18, 37, 38, 64) auf führungsbahnen der Seite und der Höhe nach geführt ist und mit einer Vorschubvorrichtung (13) für die Werkstückträger (19, 43-46), dadurch gekennzeichnet, daß die fördereinrichtung für eine Montageanlage (1) eine entlang von führungsbahnabschnitten (5-7, 9, 10, 47, 48, 51, 57, 73) auf Maschinentischen (4) und Drehvorrichtungen (24) angeordnete Vorschubvorrichtung (13) umfaßt, die den fahrwerken (17, 18, 37, 38, 64) der Werkstückträger (19, 43-46) zugeordnet ist.

2. fördereinrichtung nach Anspruch 1, dadurch gekennzeichnet, daß die Tragvorrichtung (20, 30, 63) relativ zu den fahrwerken (17, 18, 37, 38, 64) quer zur förderrichtung verstellbar gelagert ist.

3. fördereinrichtung nach Anspruch 1 oder 2, dadurch gekennzeichnet, daß ein Ende der Achse (36) auf einer quer zur förderrichtung der Werkstückträger (19, 43-46) verlaufenden führungsvorrichtung (67) abgestützt ist und daß vorzugsweise die Führungsvorrichtung (67) auf dem fahrwerk (17, 18, 37, 38, 64) gelagert ist.

4. Fördereinrichtung nach einem der Ansprüche 1 bis 3, dadurch gekennzeichnet, daß die Tragvorrichtung (20, 30, 63) auf einer parallel zur Förderrichtung verlaufenden Schwenkachse (70) gelagert und um diese gegenüber den Fahrwerken (17, 18, 37, 38, 64) verschwenkbar ist.

5. Fördereinrichtung nach einem der Ansprüche 1 bis 4, dadurch gekennzeichnet, daß die den Fahrwerken (17, 18, 37, 38, 64) der Fördereinrichtung zugeordnete Vorschubvorrichtung (13) durch an deren Seitenflächen (16) zur Anlage kommende, den Führungsbahnen benachbart angeordnete Förderrollen (15) gebildet ist.

6. Fördereinrichtung nach Anspruch 5, dadurch gekennzeichnet, daß zwischen senkrecht zueinander verlaufenden Führungsbahnabschnitten (5-7, 9, 10, 47, 48, 51, 57, 73) der Führungsbahn eine Drehvorrichtung (24) mit einem darauf angeordneten Führungsbahnabschnitt (8) angeordnet ist, dessen Länge größer ist als die Distanz der Seiten- bzw. Höhenführungsrollen (27, 28) der Fahrwerke (17, 18, 37, 38, 64) in Förderrichtung, wobei auf der Drehvorrichtung (24) ebenfalls Förderrollen (15) wie in den übrigen Führungsbahnabschnitten (5-7, 9, 10, 47, 48, 51, 57, 73) angeordnet sind.

7. Fördereinrichtung nach einem der Ansprüche 1 bis 6, dadurch gekennzeichnet, daß die Tragvorrichtung (20, 30, 63) mit einem Montageplatz (31) für ein Werkstück (2) und bzw. oder mit Aufnahmeplätzen (32) für Einzelteile (3, 34) zur Herstellung eines Werkstückes (2) versehen ist.

8. Fördereinrichtung nach einem der Ansprüche 1 bis 7, dadurch gekennzeichnet, daß die Tragvorrichtung (20, 30, 63) über bedarfsweise lösbare Kupplungsvorrichtungen (39) mit den Fahrwerken (17, 18, 37, 38, 64) verbunden ist.

9. Fördereinrichtung nach einem der Ansprüche 1 bis 8, dadurch gekennzeichnet, daß den Fahrwerken (17, 18, 37, 38, 64) und bzw. oder der Tragvorrichtung (20, 30, 63) Kodierelemente (35) und bzw. oder Übertragungseinheiten einer Kodiervorrichtung zugeordnet sind.

10. Fördereinrichtung nach einem der Ansprüche 1 bis 9, dadurch gekennzeichnet, daß zwei in Förderrichtung fluchtende, hintereinander liegende Führungsbahnabschnitte (47, 56) der Führungsbahn über eine Drehvorrichtung (24) miteinander verbunden sind und ein senkrecht zu diesen verlaufender weiterer Führungsbahnabschnitt (48) mit dem Mittelpunkt (53) der Drehvorrichtung (24) fluchtend angeordnet ist, wobei einem der beiden fluchtend hintereinander angeordneten Führungsbahnabschnitte (47) und dem senkrecht dazu verlaufenden Führungsbahnabschnitt (48) eine erste Vorschubvorrichtung mit gleichsinniger Förderrichtung und dem zweiten Führungsbahnabschnitt (48) eine Vorschubvorrichtung mit einer zur ersten Vorschubvorrichtung entgegengesetzten Förderrichtung zugeordnet ist.

11. Fördereinrichtung nach einem der Ansprüche 1 bis 10, dadurch gekennzeichnet, daß zwei Führungswege (59) in Förderrichtung hintereinander senkrecht zu einem über Drehvorrichtungen (24) mit ihnen verbundenen Führungsbahnabschnitt (5-7, 9, 10, 47, 48, 51, 57, 73) der Führungsbahn mit diesem verbunden sind und daß ein parallel zum Führungsbahnabschnitt (51, 57) verlaufender Förderwegabschnitt (52, 58) über weitere Drehvorrichtungen (24) mit den quer verlaufenden Führungswegen (59) verbunden und in einem der Distanz (55) zwischen den Fahrwerken (17, 18 ; 37, 38) entsprechenden Abstand (60) angeordnet sind.

12. Fördereinrichtung nach einem der Ansprüche 1 bis 11, dadurch gekennzeichnet, daß die voneinander abgewendeten Enden der Tragvorrichtung (20, 30, 63) innerhalb eines Umhüllungskreises angeordnet sind, dessen Mittelpunkt in der Mitte zwischen den vertikalen Achsen (36) zwischen den Fahrwerken (17, 18, 37, 38, 64) und der Tragvorrichtung (20, 30, 63) liegt.

13. Fördereinrichtung nach einem der Ansprüche 1 bis 12, dadurch gekennzeichnet, daß die Tragvorrichtung (20, 30, 63) mehrteilig ausgebildet ist und die Teile über eine Gelenkanordnung, insbesondere eine gelenkige, bedarfsweise lösbare Kupplungsvorrichtung untereinander verbunden sind.

14. Fördereinrichtung nach einem der Ansprüche 1 bis 13, dadurch gekennzeichnet, daß auf der Tragvorrichtung (20, 30, 63) Aufnahmeplätze (32) und bzw. oder Kupplungsvorrichtungen für Zwischenträger von Bauteilen und bzw. oder Einzelteilen (3) angeordnet sind.

15. Fördereinrichtung nach einem der Ansprüche 1 bis 14, dadurch gekennzeichnet, daß zwischen verschiedenen Förderbahnabschnitten quer zur Förderrichtung verschiebbare Förderbahnteile vorgesehen sind, die mit einer Querverstellvorrichtung verbunden sind und mit dieser aus einer mit einem ersten Abschnitt fluchtenden Stellung in eine mit einem zweiten Abschnitt einer parallel laufenden Förderbahn fluchtende Stellung verstellbar sind.

16. Fördereinrichtung nach Anspruch 15, dadurch gekennzeichnet, daß die querverstellbaren Förderbahnteile in Förderrichtung der Förderbahn eine Länge aufweisen, die größer ist als der Abstand zwischen den in Förderrichtung am weitesten voneinander distanzierten Seiten- bzw. Höhenführungsrollen (27, 28) von zwei einer Tragvorrichtung (20, 30, 63) zugeordneten Fahrwerken (17, 18, 37, 38, 64).

17. Fördereinrichtung nach einem der Ansprüche 15 oder 16, dadurch gekennzeichnet, daß dem querverschiebbaren Förderbahnteil eine Halte- bzw. Fixiervorrichtung für die Fahrwerke (17, 18, 37, 38, 64) zum Positionieren derselben innerhalb des Förderbahnteiles zugeordnet ist.

18. Fördereinrichtung nach einem der Ansprüche 1 bis 17, dadurch gekennzeichnet, daß auf der Tragvorrichtung (20, 30, 63) im Bereich ihrer parallel zur Förderrichtung verlaufenden Längskanten quer zur Förderrichtung ausgerichtete Stoßdämpfer (85) angeordnet sind.

## Claims

1. Conveying system for workpiece carriers (19, 43-46) with a carrying device (20, 30, 63) which in its end regions spaced apart from one another in the conveying direction of the workpiece carriers (19, 43-46) is guided laterally and vertically on guiding tracks via a carriage (17, 18, 37, 38, 64) each pivotally mounted relative the carrying device (20, 30, 63) about spindles (36) extending perpendicularly to the vertical guiding track, and with a feed device (13) for the workpiece carriers (19, 43-46), characterised in that the conveying system for an assembling plant (1) comprises a feed device (13), associated with carriages (17, 18, 37, 38, 64) of the workpiece carriers (19, 43-46), arranged on supporting tables (4) and turning mechanisms (24) along guiding track sections (5-7, 9, 10, 47, 48, 51, 57, 73).

2. Conveying system according to claim 1, characterised in that the carrying device (20, 30, 63) is adjustably mounted transversely to the conveying direction of the carriages (17, 18, 37, 38, 64).

3. Conveying system according to claim 1 or 2, characterised in that one end of the spindle (36) is supported on a guiding device (67) extending transversely to the conveying direction of the workpiece carriers (19, 43-46) and that the guiding device (67) is preferably mounted on the carriage (17, 18, 37, 38, 64).

4. Conveying system according to one of the claims 1 to 3, characterised in that the carrying device (20, 30, 63) is mounted on a pivot spindle (70) extending parallel to the conveying direction and is pivotable around it with respect to the carriages (17, 18, 37, 38, 64).

5. Conveying system according to one of the claims 1 to 4, characterised in that the feed mechanism (13) associated with the carriages (17, 18, 37, 38, 64) of the conveying system is formed by conveying rollers (15) arranged adjacent to the guiding tracks and placed in contact with their lateral surfaces (16).

6. Conveying system according to claim 5, characterised in that a turning mechanism (24) with a guiding track section (8) arranged upon it is situated between mutually perpendicularly extending guiding track sections (5-7, 9, 10, 47, 48, 51, 57, 73) of the guiding track, and that the length of the guiding track section (8) is greater than the distance of the lateral or vertical guide rollers (27, 28) of the carriages (17, 18, 37, 64) in the conveying direction, wherein conveying rollers (15) are likewise arranged on the turning mechanism (24), as in the remaining guiding track sections (5-7, 9, 10, 47, 51, 57, 73).

7. Conveying system according to one of the claims 1 to 6, characterised in that the carrying device (20, 30, 63) is provided with an assembling space (31) for a workpiece (2) and/or with receiving spaces (32) for individual parts (3, 34) for the production of a workpiece (2).

8. Conveying system according to one of the claims 1 to 7, characterised in that the carrying device (20, 30, 63) is joined to the carriages (17, 18, 37, 38, 64) via coupling devices (39) which are disengageable if need be.

9. Conveying system according to one of the claims 1 to 8, characterised in that coding elements (35) and/or transfer units of a coding device are associated with the carriages (17, 18, 37, 38, 64) and/or the carrying device (20, 30, 63).

10. Conveying system according to one of the claims 1 to 9, characterised in that two successively positioned guiding track sections (47, 56) of the guiding track which are aligned in the conveying direction are interconnected via a turning mechanism (24), and another guiding track section (48) extending perpendicularly to these is positioned in alignment with the centre point (53) of the turning mechanism (24), wherein one of the two guiding track sections (47) arranged one behind the other in alignment and the guiding track section (48) extending perpendicularly thereto is associated with a first feed device having the same conveying direction, and the second guiding track section (48) is associated with a feed device having a conveying direction opposite to that of the first feed device.

11. Conveying system according to one of the claims 1 to 10, characterised in that two guiding paths (59) are joined one behind the other in the conveying direction perpendicularly to a guiding track section (5-7, 9, 10, 47, 48, 57, 73) of the guiding track which are connected with these via turning mechanisms (24) and that a conveyor path section (52, 58) extending parallel to the guiding track section (51, 57) are linked to the transversely extending guiding paths (59) via further turning mechanisms (24) and are arranged at an interval (60) corresponding to the distance (55) between the carriages (17, 18 ; 38).

12. Conveying system according to one of the claims 1 to 11, characterised in that the ends facing away from one another of the carrying device (20, 30, 63) are situated within an enveloping circle whose centre point is arranged in the middle between the vertical spindles (36), between the carriages (17, 18, 37, 38, 64) and the carrying device (20, 30, 63).

13. Conveying system according to one of the claims 1 to 12, characterised in that the carrying device (20, 30, 63) is constructed in several parts and the parts are interconnected via an articulation system, in particular an articulated coupling device which is disengageable if need be.

14. Conveying system according to one of the claims 1 to 13, characterised in that receiving spaces (32) and/or coupling devices for intermediate carriers of components and/or individual parts (3) are situated on the carrying device (20, 30, 63).

15. Conveying system according to one of the claims 1 to 14, characterised in that between different conveying track sections are provided conveyor track elements displaceable transversely to the conveying direction, which are connected to a transverse adjusting device and with this may be adjustable from a position aligned with a first section to a position aligned with a second section of a parallel running conveyor track.

16. Conveying system according to claim 15, characterised in that the transversely adjustable conveyor track sections have a length in the conveying direction of the conveyor track which is greater than the interval between the lateral or vertical guiding rollers (27, 28), when spaced the furthest distance from each other, of two carriages (17, 18, 37, 38, 64) associated with a carrying device (20, 30, 63).

17. Conveying system according to one of the claims 15 to 16, characterised in that associated with the transversely displaceable conveyor track section is a securing or locating device for the carriages (17, 18, 37, 38, 64) for positioning these within the conveyor track section.

18. Conveying system according to one of the claims 1 to 17, characterised in that shock absorbers (85) aligned transversely to the conveying direction are arranged on the carrying device (20, 30, 63) in the area of its longitudinal edges extending parallel to the conveying direction.


**Revendications**

1. Système de transport pour porte-pièces d'oeuvre (19, 43-46) avec un dispositif de support (20, 30, 63) qui, dans ses régions extrêmes espacées l'une de l'autre en direction de transport des porte-pièces d'oeuvre (19, 43-46), est guidé, latéralement et en hauteur sur des voies de guidage, par l'intermédiaire respectivement d'un dispositif roulant (17, 18, 37, 38, 64) monté pivotant, relativement au dispositif de support (20, 30, 63), autour d'axes (36) s'étendant perpendiculairement à la voie de guidage en hauteur et avec un dispositif d'avancement (13) pour les porte-pièces d'oeuvre (19, 43-46), caractérisé en ce que le système de transport pour une installation de montage (1) comprend un dispositif d'avancement (13) disposé le long de tronçons de voie de guidage (5-7, 9, 10, 47, 48, 51, 57, 73) sur des tables de machine (4) et dispositifs tournants (24), lequel est associé aux dispositifs roulants (17, 18, 37, 38, 64) des porte-pièces d'oeuvre (19, 43-46).

2. Système de transport selon la revendication 1, caractérisé en ce que le dispositif de support (20, 30, 63) est monté de façon déplaçable transversalement à la direction de transport relativement aux dispositifs roulants (17, 18, 37, 38, 64).

3. Système de transport selon la revendication 1 ou 2, caractérisé en ce qu'une extrémité de l'axe (36) est supportée sur un dispositif de guidage (67) s'étendant transversalement à la direction de transport des porte-pièces d'oeuvre (19, 43-46) et en ce que, de préférence, le dispositif de guidage (67) est monté sur le dispositif roulant (17, 18, 37, 38, 64).

4. Système de transport selon l'une des revendications 1 à 3, caractérisé en ce que le dispositif de support (20, 30, 63) est monté sur un axe de pivotement (70) s'étendant parallèlement à la direction de transport et peut pivoter autour de celui-ci par rapport aux dispositifs roulants (17, 18, 37, 38, 64).

5. Système de transport selon l'une des revendications 1 à 4, caractérisé en ce que le dispositif d'avancement (13), associé aux dispositifs roulants (17, 18, 37, 38, 64) du système de transport, est constitué par des galets de transport (15) venant en application contre ses surfaces latérales (16) et montés au voisinage des voies de guidage.

6. Système de transport selon la revendication 5, caractérisé en ce qu'entre des tronçons de voie de guidage (5-7, 9, 10, 47, 48, 51, 57, 73) de la voie de guidage, s'étendant perpendiculairement les uns aux autres, est disposé un dispositif tournant (24) avec un tronçon de voie de guidage (8) monté sur celui-ci, dont la longueur est plus grande que la distance des galets de guidage latéral et en hauteur (27, 28) des dispositifs roulants (17, 18, 37, 38, 64) en direction de transport, des galets de transport (15) étant également montés sur le dispositif tournant (24) comme dans les tronçons de voie de guidage restants (5-7, 9, 10, 47, 48, 51, 57, 73).

7. Système de transport selon l'une des revendications 1 à 6, caractérisé en ce que le dispositif de support (20, 30, 63) est pourvu d'un emplacement de montage (31) pour une pièce d'oeuvre (2) et/ou d'emplacements de réception (32) pour pièces détachées (3, 34) pour la fabrication d'une pièce d'oeuvre (2).

8. Système de transport selon l'une des revendications 1 à 7, caractérisé en ce que le dispositif de support (20, 30, 63) est relié aux dispositifs roulants (17, 18, 37, 38, 64) par des dipositifs d'accouplement (39) mobiles en cas de besoin.

9. Système de transport selon l'une des revendications 1 à 8, caractérisé en ce qu'aux dispositifs roulants (17, 18, 37, 38, 64) et/ou au dispositif de support (20, 30, 63) sont associés des éléments de codage (35) et/ou des unités de transmission d'un dispositif de codage.

10. Système de transport selon l'une des revendications 1 à 9, caractérisé en ce que deux tronçons de voie de guidage (47, 56) de la voie de guidage, alignés et situés l'un derrière l'autre en direction de transport, sont reliés entre eux par l'intermédiaire d'un dispositif tournant (24) et un autre tronçon de voie de guidage (48), s'étendant perpendiculairement à ceux-ci, est disposé en alignement avec le centre (53) du dispositif tournant (24), tandis qu'un premier dispositif d'avancement, à direction de transport dans le même sens, est associé à l'un des deux tronçons de voie de guidage (47) disposés l'un derrière l'autre en alignement et au tronçon de voie de guidage (48) s'étendant perpendiculairement à celui-ci et un dispositif d'avancement, avec une direction de transport opposée au premier dispositif d'avancement, est associé au deuxième tronçon de voie de guidage (48).

11. Système de transport selon l'une des revendications 1 à 10, caractérisé en ce que deux chemins de guidage (59) sont reliés, en direction de transport l'un derrière l'autre à un tronçon de voie de guidage (5-7, 9, 10, 47, 48, 51, 57, 73) de la voie de guidage reliés à ceux-ci par l'intermédiaire de dispositifs tournants (24) et perpendiculairement à celui-ci et en ce qu'un tronçon de chemin de transport (52, 58), s'étendant parallèlement au tronçon de voie de guidage (51, 57), est relié par l'intermédiaire d'autres dispositifs tournants (24) aux chemins de guidage (59) s'étendant transversalement et sont disposés à un intervalle d'écartement (60) correspondant à la distance (55) entre les dispositifs roulants (17, 18 ; 37, 38).

12. Système de transport selon l'une des revendications 1 à 11, caractérisé en ce que les extrémités, tournées à l'opposé l'une de l'autre, du dispositif de support (20, 30, 63) sont disposées à l'intérieur d'un cercle enveloppant dont le centre est situé au milieu entre les axes verticaux (36) entre les dispositifs roulants (17, 18, 37, 38, 64) et le dispositif de support (20, 30, 63).

13. Système de transport selon l'une des revendications 1 à 12, caractérisé en ce que le dispositif de support (20, 30, 63) est réalisé en plusieurs parties et les parties sont reliées entre elles par l'intermédiaire d'un agencement d'articulation, en particulier d'un dispositif d'accouplement articulé, mobile en cas de besoin.

14. Système de transport selon l'une des revendications 1 à 13, caractérisé en ce que sur le dispositif de support (20, 30, 63) sont disposés des emplacements de réception (32) et/ou des dispositifs d'accouplement pour des supports intermédiaires d'éléments de construction et/ou de pièces détachées (3).

15. Système de transport selon l'une des revendications 1 à 14, caractérisé en ce qu'entre différents tronçons de voie de transport sont prévus des éléments de voie de transport déplaçables transversalement à la direction de transport, qui sont reliés à un dispositif de déplacement transversal et sont déplaçables, avec celui-ci, depuis une position alignée avec un premier tronçon jusqu'à une position alignée avec un second tronçon d'une voie de transport s'étendant parallèlement.

16. Système de transport selon la revendication 15, caractérisé en ce que les éléments de voie de transport transversalement déplaçables présentent, en direction de transport de la voie de transport, une longueur qui est plus grande que l'espacement entre les galets de guidage latéral et en hauteur (27, 28), les plus éloignés l'un de l'autre en direction de transport, de deux dispositifs roulants (17, 18, 37, 38, 64) associés à un dispositif de support (20, 30, 63).

17. Système de transport selon l'une des revendications 15 ou 16, caractérisé en ce qu'à l'élément de voie de transport transversalement déplaçable est associé un dispositif de maintien et de fixation pour les dispositifs roulants (17, 18, 37, 38, 64) pour le positionnement de ceux-ci à l'intérieur de l'élément de voie de transport.

18. Système de transport selon l'une des revendications 1 à 17, caractérisé en ce que sur le dispositif de support (20, 30, 63), au voisinage de ses bords longitudinaux s'étendant parallèlement à la direction de transport, sont disposés des amortisseurs de chocs (85) orientés transversalement à la direction de transport.

EP 0 363 368 B1

**Fig.1**

**Fig.2**

# Fig.3

# Fig.4

Fig.5

Fig.6